(19) Europäisches Patentamt
European Patent Office
Office européen des brevets

(11) **EP 4 315 074 B1**

(12) **EUROPEAN PATENT SPECIFICATION**

(45) Date of publication and mention
of the grant of the patent:
**27.11.2024 Bulletin 2024/48**

(21) Application number: **22730088.6**

(22) Date of filing: **16.05.2022**

(51) International Patent Classification (IPC):
**G06F 8/65** (2018.01)　　　**G06F 11/07** (2006.01)

(52) Cooperative Patent Classification (CPC):
**G06F 8/65;** G06F 11/0751

(86) International application number:
**PCT/EP2022/063210**

(87) International publication number:
**WO 2022/243256 (24.11.2022 Gazette 2022/47)**

(54) **COMPUTER-IMPLEMENTED METHOD FOR UPDATING A MODEL PARAMETER FOR A MODEL**

COMPUTERIMPLEMENTIERTES VERFAHREN ZUR AKTUALISIERUNG EINES MODELLPARAMETERS FÜR EIN MODELL

PROCÉDÉ MIS EN ŒUVRE PAR ORDINATEUR POUR LA MISE À JOUR D'UN PARAMÈTRE POUR UN MODÈLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2021 EP 21174762**

(43) Date of publication of application:
**07.02.2024 Bulletin 2024/06**

(73) Proprietor: **Siemens Aktiengesellschaft**
**80333 München (DE)**

(72) Inventors:
- **GUO, Zhensheng**
  **85659 Forstern (DE)**
- **ROTHBAUER, Stefan**
  **86156 Augsburg (DE)**
- **ZELLER, Marc**
  **81243 München (DE)**

(74) Representative: **Siemens Patent Attorneys**
**Postfach 22 16 34**
**80506 München (DE)**

(56) References cited:
**US-A1- 2018 267 864**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

1. Technical field

The present invention relates to a computer-implemented method for updating a model parameter for a model, wherein the model parameter to be updated comprises a model parameter value and a confidence score. Further, the invention relates to a corresponding computing unit and a corresponding computer program product.

2. Prior art

According to prior art, the model parameters for the model are specified once during design e.g. based on expert estimations, available data from standards, literature and databases etc. However, the model parameters in the field (real world) can be different from those assumed at design time or due to changes (e.g. new system environment) over the lifetime of the system. There are a variety of reasons for this drift, such as inaccurate estimates, different use cases than foreseen and different environmental conditions etc.

Usually, according to prior art, updates for model parameters are not performed due to e.g. the high manual effort and the lack of design for data collection. The disadvantage is that the system model including the system model parameters remains conserved and the model prediction performance in the real world, considering environmental aspects, use cases not foreseen during design etc. may significantly decrease over time.

Document US 2018/0267864 A1 discloses an image forming apparatus capable of automatically rolling back the system to an appropriate state.

It is therefore an objective of the invention to provide a computer-implemented method for updating a model parameter for a model in an efficient and a reliable manner.

3. Summary of the invention

This problem is according to one aspect of the invention solved by a computer-implemented method for updating a model parameter for a model, wherein the model parameter to be updated comprises a model parameter value and a confidence score; comprising the steps:

   a. Providing the model parameter to be updated, a first input data set with data accumulated since a first or previous update, a second input data set with data accumulated and used for the first or previous update;

   b. Determining a statistical significance of the first input data set and/or the second input data set regarding at least one condition to perform the update;

   c. Determining an updated model parameter using an estimation approach based on the model parameter to be updated and the first input data set, if the first input data set is statistically significant; wherein the updated model parameter comprises an updated model parameter value and an updated confidence score;

   d. Determining an updated model parameter using an estimation approach based on the model parameter to be updated, the first input data set and the second input data set or maintain the model parameter to be updated as the updated model parameter, if the first input data set and the second input data set are not statistically significant; and

   e. Providing the determined updated model parameter as output.

Accordingly, the invention is directed to a computer-implemented method for updating a model parameter for a model. The model parameter to be updated comprises the model parameter value and the confidence score. The model parameter can be denoted as MP, wherein the model parameter is a tuple with MP = (Model Parameter Value, Confidence in Model Parameter) = (MP_value, MP_conf).

MP_value can be e.g. a failure rate and MP_conf reflects the probability that the unknown real parameter value is within a predefined range of the assumed model parameter value (MP_value) e.g. within the interval [90% * MP_value; 110% MP_value] .

In a first step, the input data for the update is provided or received, by e.g. a receiving unit or an interface. The input data comprises the model parameter to be updated, the first input data set and the second input data set. The first input data set comprises data accumulated since the first or previous update. The second input data set comprises data accumulated and used for the first or previous update. The data comprise data items.

In a second step the statistical significance of the first input data set is determined. Accordingly, in other words, it is verified or checked whether the first input data set meets at least one condition. The condition can be equally referred to as update condition or requirement to be fulfilled. In other words, the statistical significance of the data is determined to get information regarding the model parameter such as failure rate from e.g. observed downtimes or failures. Exemplary conditions are the number of component failures, the number of failures, the number of failure modes, the total hours of operation of one or more components, the distribution of the data, the individual data e.g. for component operation and failures and additional data giving context (such as operational profile and environmental conditions for each dataset). In this case, the statistical significance is confirmed or guaranteed, and the update can be performed on the basis of the first input data set reliably.

In other words, in this step, it is determined whether the first input data set allows for a statistically significant parameter estimate with regard to at least one condition, so that the estimate can be used for a parameter update.

In the next step, in this case, after successful verification of the statistical significance and confirmation, the first input data set is used as input for the update. The update is performed by means of the estimation approach. The update results in the updated model parameter, and hence updated respective model parameter value and confidence score.

In the other case, the first input data set does not meet the at least one condition and the update cannot be performed with the desired reliability solely on the basis of the first input data set.

According to a first option, the update is prevented, hence skipped or not performed. This skipped update results in the model parameter to be updated as updated model parameter. In other words, the input model parameter to be updated remains unchanged since no update took place. The data can be used for a next potential update.

Alternatively, according to another second option, the first input data set is extended with more data, namely the second input data set. The update is performed on the extended data including the model parameter to be updated, the first input data set and the second input data set. The update is performed by means of the estimation approach based on the extended data. The update results in the updated model parameter, and hence updated respective model parameter value and confidence score.

The said two alternative options - Skipping the update or extending the first input data set with more data - can depend on the use case, underlying technical system and other requirements or conditions.

The advantage of the second option is that an update is performed more often. The disadvantage, however, is that historical data has to be stored, thereby increasing the effort.

The update can be performed on computing systems with enough resources, such as Edge Devices or Cloud, to prevent any limitations in view of storage space etc.

In the last step the determined updated model parameter is provided as output. The updated model parameter can be used for any model depending on the use case, underlying technical system and other requirements or conditions.

The updated model parameter can be denoted as MP updated, wherein the model parameter updated is a tuple with MP updated = (Model Parameter Value updated, Confidence in Model Parameter updated) = (MP_value updated, MP_conf updated).

The advantage of the present invention is that the model parameter, mostly fixed once at design time, is updated and adapted to any adaptations or changes, as mentioned above, such as any changes in the system environment or occurring during the systems life time. The reliable model parameter applied on the model, results also in an improved reliability of the model performance and resulting model output. For example, a system model capturing the failure behavior is improved and system failures are predicted more reliably or more suitable operational measures can be taken, such as the adaptation of preventive maintenance intervals or frequency of routine checks to suit the model prediction calibrated by updated parameter values.

Moreover, the advantage of the present invention is that the impact of outliers is significantly reduced and the update cycle is automated as far as possible, resulting in an efficient update and reduced effort.

Moreover, deviations from the expected behavior can be detected e. g. due to components used under environmental conditions not foreseen in design.

In one aspect the accumulated data comprise a plurality of data items. Accordingly, the data is to be interpreted in the common sense.

In another aspect the data is generated by a data generation component and/or collected by a DevOps Feedback loop. Accordingly, the data is generated or collected via the DevOps Feedback loop or DevOps feedback loop mechanisms. DevOps has proven to be advantageous in view of using field experience efficiently as input for further development. The true value can be estimated using data observed in the field.

In another aspect the data is collected periodically, at regular intervals, in short intervals, in mid intervals, in long intervals, at fixed points in time and/or event driven. Accordingly, the update is performed periodically, regularly or is triggered depending on time points or events. This way, it is guaranteed that the update is performed repeatedly and/or continuously and hence the model parameter remains up to date and reliable. In other words, the regular update keeps the models in sync with real world and ensures the correction of potentially wrong estimations.

Short term updates are used to frequently update the model parameters, in a periodic or event driven way. The focus of the short term updates is on providing updates on the smallest viable data sets that allow confident updates. For efficiency reasons they need to be automated completely from collecting the data to applying the updated value, since they are performed frequently. This can limit the population included in the update, as the automation of collecting data from different production sites, customers and/or operators may not be possible. They operate on a smaller amount of field experience which in general will provide less confidence than updating on larger amounts of field experience. The increased risk of an update that deviates from the (correct but unknown value of the parameter), a "wrong update" is balanced with the shorter duration until the next update which has a high chance of correcting potentially wrong updates. Short term could be hourly, daily, weekly updates (periodic type) or on each observed failure, each n = 2, 3, 5, 10 observed failures (event driven type).

Mid term updates are used to ensure the newly provided (updated) value has a high confidence and a larger amount of field experience is included in the update. As a larger amount of field experience is included, they usually enable more reliable estimates, especially for highly reliable systems, where long observation times are needed to observe sufficiently many failures. Usually, mid term updates will be performed periodically using data of longer time horizons, e. g. one month, several months e.g. 3 and potentially including as many customers as possible. Since these updates are not performed so often, some manual work for analyzing the data is feasible, such as a pre-analysis to include and/or exclude certain parts of the observed field data.

Long term updates are planned and the manual analysis is based on data gathered via the DevOps Feedback Loop mechanisms. The long term updates include even more data as the mid term updates, more manual effort for data collection and gathering as well as analysis is feasible. Evaluation of subgroups using e. g. context information such as environmental conditions and usage profiles that are hard to judge in an automated way can be used. Although the effort is high, given the large amount of data collected by the DevOps Feedback mechanism it might provide very reliable estimates and could be worth the effort depending on the application.

In another aspect the model is a system model, preferably a system model capturing the failure behavior.

In another aspect the system model is a failure model of a system, wherein the failure model is a fault tree (FT) or a component fault tree (CFT).

In another aspect the model parameter is a failure, a failure rate, a component failure, a component failure rate or a failure mode.

According to an embodiment and exemplary use case, the failure behavior of a system is considered. The system model capturing the failure behavior can be designed as a fault tree (FT) resulting in RAMS (Reliability Availability Maintainability and Safety) values such as a system failure rate, a MDT (mean down time), an availability and unavailability. The model parameters to be updated can be respective individual contributing failure rates of system parts, components, environmental impacts and mean times to repair.

Other use cases include NFRs (non-functional requirements) such as performance estimation based on performance models. Accordingly, distinct model parameters and models can be used in a flexible manner depending on the use case, underlying technical system and other requirements or conditions.

In another aspect the estimation approach is a statistic estimation method.

The estimation approach can be application or use case specific. Thereby, general statistical methods, rule-based methods or heuristics e.g. domain specific can be utilized.

According to an embodiment a weighted average is used as an approach for the update with Anew = (1-$\alpha$) $\lambda$current + $\alpha$ $\lambda$observed. The learning rate $\alpha$ can be changed over time to reflect the desired impact of new data vs. experience e.g. using the weighted average.

A further aspect of the invention is a computing unit e.g. robot unit or another autonomous unit.

The unit may be realized as any devices, or any means, for computing, in particular for executing a software, an app, or an algorithm. For example, the unit may consist of or comprise a central processing unit (CPU) and/or a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the unit may be implemented by a cloud computing platform.

4. Short description of the drawings

In the following detailed description, presently preferred embodiments of the invention are further described with reference to the following figures:

Fig. 1     shows a schematic diagram of the method according to the invention.

Fig. 2     shows a schematic representation of the method according to an embodiment, including short term, mid term and long term updates.

Fig. 3    shows a schematic representation of the method according to an embodiment.

5. Detailed description of preferred embodiments

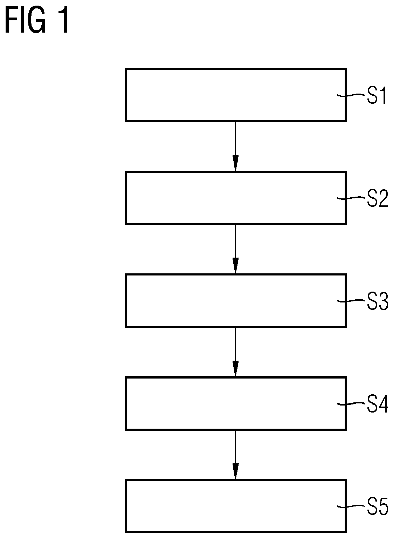

Figure 1 illustrates a flowchart of the method according to the invention with the method steps S1 to S5.

Model parameter updates using DevOps feedback loops

The DevOps Feedback loop is used to automatically collect data for the components behavior of interest according to an embodiment. The data can be used to update the model parameters. Moreover, the updates can be performed periodically.
According to an embodiment, a weighted average is used as an approach for the update, as follows

$$\lambda new = (1-\alpha)\ \lambda current + \alpha\ \lambda observed$$

Depending on the domain, application and specific use case, other approaches, e. g. using statistical methods to estimate the parameter of interest can be considered. The specific importance of more recent observations vs. historic data can be taken into account as well.
An exemplary use case is the update of the failure model, e. g. a fault tree (FT) or component fault tree (CFT) of a system. The used failure rate or component failure rate $\lambda$ is updated based on an estimation of the observed failure rate and currently used failure rate of contributing events.

Pseudocode for updates of model parameters (MP)

MP can be denoted as a tuple with MP = (Model Parameter Value, Confidence in Model Parameter) = (MP_value, MP_conf).
Input:

    MP (MP to be updated): MP_value, MP_conf
    data_new (first input data set): data accumulated since last update
    data_last (second input data set): data accumulated and used for last update

Algorithm:

    Determine whether data_new is sufficient to do an update if statistically sufficient, determine MP_new based on MP, data_new to obtain MP_new = (MP_new_value, MP_new_conf)

    if not statistically sufficient, determine MP_new based on MP, data_last, data_new to obtain MP_new = (MP_new_value, MP_new_conf), if data_last and data_new allow a statistically significant determination of MP_new or skip the update

    Return MP_new = (MP_new_value, MP_new_conf)

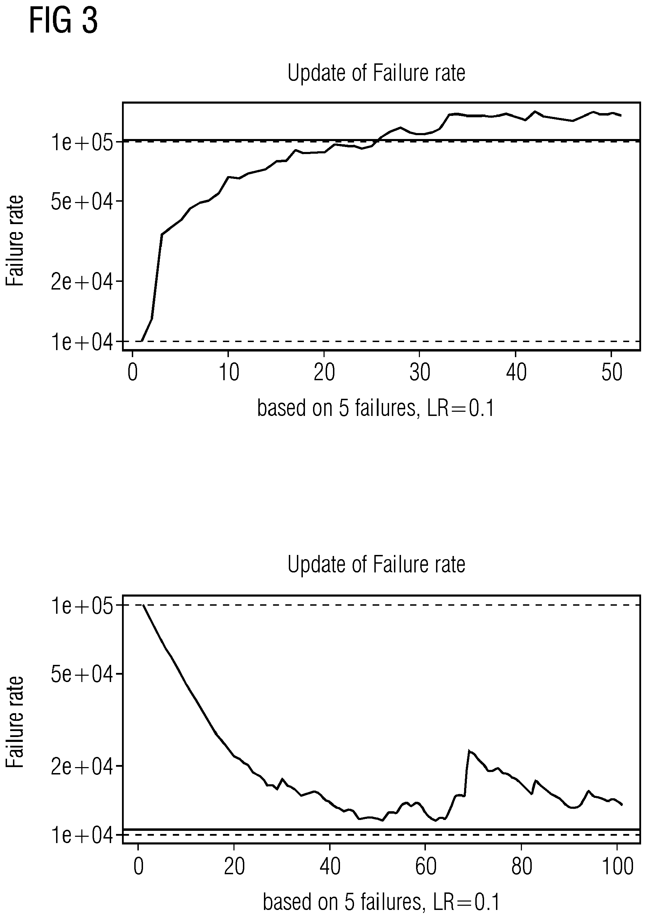

The updates can be long term, short term or mid term updates according to an embodiment.
For mid term and long term updates a human in the loop can interact to resolve the conflict. For short term updates a standard resolution is to wait for the next point in time for a short term update.

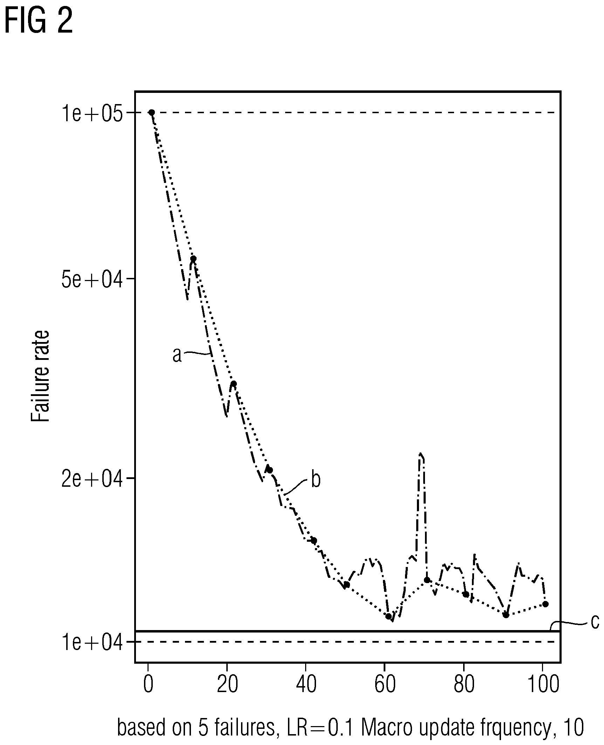

Figure 2 illustrates a schematic representation of the method according to an embodiment, including short term, mid term and long term updates. In Figure 2, a indicates the short term update and data points of the update, b indicates the mid term update and c indicates the long term update.
The model parameter MP failure rate is updated in intervals a to c. The x-axis denotes each update. The update is performed on each 5 failures observed in a fleet of 1000 field devices that exhibit a true failure rate of $10^4$ fit (1 fit = $1/10^9$ failures / h), but at design time the failure rate was estimated to be $10^5$ fit. The failure rate of the short term update is adapted very early. At each data point of the short term update a corresponding to a certain point in time a conservative learning rate of 10% is applied. This ensures that potentially misleading observations, as e. g. present in the values at update 68 and 69 (spike) do not get too much weight. Additionally, every ten short term updates a mid term update using the data since the last mid term update is used. These mid term updates indicated with b are performed with a higher learning rate of 50%, as the confidence in the estimation of the observed value is higher and lead to a correction of estimations that deviate from the (in practice unknown) value. At the updates 57-59 it can also be noted, that short term updates will also correct a deviating observation quite quickly. Moreover, a long term update at x=100 is performed, leading to the value indicated with c. Figure 3 illustrates a schematic representation of the method according to an embodiment. The failure rate update characteristics of using short term updates only is shown. The data stems from a simulation of 1000 devices in field, up to the failure of 500 devices. An update of the failure rate is performed after each 5 observed failures as the criterium to ensure confidence in the observed failure rates.

The learning rate $\alpha = 0.1$ was applied to give some weight to the experience gathered in the current value, but over time let past experience vanish more and more.

On the left, the initially estimated failure rate was chosen to be 10E4 fit, while the True failure rate was assumed to be 10E5 fit.

This scenario is unwanted in practice as the system exhibits a much higher failure behavior as assumed, which might lead to not reaching a systems goals, e. g. the safety goals.

On the right, the initial failure rate was assumed to be 10E5 fit, while the true failure rate was assumed to be 10E4 fit. This scenario is also unwanted, as the system is much more reliable than claimed. More reliable systems might be sold at a higher price or measures taken to additionally ensure the system is as safe as expected might be released (e. g. fewer tests, inspections and/or later preventive maintenance). In both cases, it can be noted that the convergence towards the true failure rate is fast (exponential) and that the estimation will likely overestimate the true failure rate by a small amount (which is desired, gives confidence of not making false claims but also not being far of e. g. by a factor of 10). Estimations deviating from the true value are possible (statistic nature of observed data), but corrected rather shortly. These deviating estimations can be minimized with more stringent conditions on the performance of an update.

**Claims**

1. Computer-implemented method for updating a model parameter for a model, wherein the model parameter to be updated comprises a model parameter value and a confidence score;
comprising the steps:
**characterized in that**

    a. Providing the model parameter to be updated, a first input data set with data accumulated since a first or previous update, a second input data set with data accumulated and used for the first or previous update (S1);
    b. Determining a statistical significance of the first input data set and/or the second input data set regarding at least one condition to perform the update (S2);
    c. Determining an updated model parameter using an estimation approach based on the model parameter to be updated and the first input data set, if the first input data set is statistically significant (S3); wherein

        the updated model parameter comprises an updated model parameter value and an updated confidence score;
        if the first input data set does not meet the at least one condition, the update is prevented; or the first input data set is extended with the second input data set and the update is performed on the extended data;

    d. Determining an updated model parameter using an estimation approach based on the model parameter to be updated, the first input data set and the second input data set or maintain the model parameter to be updated as the updated model parameter, if the first input data set and the second input data set are not statistically significant (S4); and
    e. Providing the determined updated model parameter as output (S5).

2. Computer-implemented method according to claim 1, wherein the accumulated data comprise a plurality of data items.

3. Computer-implemented method according to claim 1 or claim 2, wherein the data is generated by a data generation component and/or collected by a DevOps Feedback loop.

4. Computer-implemented method according to any of the preceding claims, wherein the data is collected periodically, at regular intervals, in short intervals, in mid intervals, in long intervals, at fixed points in time and/or event driven.

5. Computer-implemented method according to any of the preceding claims, wherein the model is a system model.

6. Computer-implemented method according to claim 5, wherein the system model is a failure model of a system, wherein the failure model is a fault tree (FT) or a component fault tree (CFT).

7. Computer-implemented method according to claim 5 or claim 6, wherein the model parameter is a failure, a failure rate, a component failure, a component failure rate or a failure mode.

8. Computer-implemented method according to any of the preceding claims, wherein the estimation approach is a statistic estimation method.

9. A computing unit for performing the method steps according to any of the preceding claims.

10. A computer program product directly loadable into an internal memory of a computer, comprising software code portions for performing the steps according to any one of the claims 1 to 8 when said computer program product is running on a computer.


**Patentansprüche**

1. Computergestütztes Verfahren zum Aktualisieren eines Modellparameters für ein Modell, wobei der zu aktualisierende Modellparameter einen Modellparameterwert und einen Konfidenzwert umfasst,
mit folgenden Schritten:
**dadurch gekennzeichnet, dass**

   a. Bereitstellen des zu aktualisierenden Modellparameters, eines ersten Eingabedatensatzes mit seit einer ersten oder vorhergehenden Aktualisierung angesammelten Daten, eines zweiten Eingabedatensatzes mit für die erste oder vorhergehende Aktualisierung angesammelten und benutzten Daten (S1),
   b. Bestimmen einer statistischen Signifikanz des ersten und/oder des zweiten Eingabedatensatzes bezüglich mindestens einer Bedingung zum Durchführen der Aktualisierung (S2),
   c. Bestimmen eines aktualisierten Modellparameters mithilfe eines Schätzungsansatzes, der auf dem zu aktualisierenden Modellparameter und dem ersten Eingabedatensatz basiert, wenn der erste Eingabedatensatz statistisch signifikant ist (S3), wobei

      der aktualisierte Modellparameter einen aktualisierten Modellparameterwert und einen aktualisierten Konfidenzwert umfasst,
      wenn der erste Eingabedatensatz der mindestens einen Bedingung nicht genügt, die Aktualisierung verhindert oder der erste Eingabedatensatz um den zweiten Eingabedatensatz erweitert und die Aktualisierung an den erweiterten Daten durchgeführt wird,

   d. Bestimmen eines aktualisierten Modellparameters mithilfe eines Schätzungsansatzes, der auf dem zu aktualisierenden Modellparameter, dem ersten und dem zweiten Eingabedatensatz basiert, oder Beibehalten des zu aktualisierenden Modellparameters als aktualisierten Modellparameter, wenn der erste und der zweite Eingabedatensatz nicht statistisch signifikant sind (S4), und
   e. Bereitstellen des bestimmten aktualisierten Modellparameters als Ausgabe (S5).

2. Computergestütztes Verfahren nach Anspruch 1, wobei die angesammelten Daten mehrere Datenelemente umfassen.

3. Computergestütztes Verfahren nach Anspruch 1 oder 2, wobei die Daten von einer Datenerzeugungskomponente erzeugt und/oder über eine DevOps-Feedbackschleife gesammelt werden.

4. Computergestütztes Verfahren nach einem der vorhergehenden Ansprüche, wobei die Daten periodisch, in regelmäßigen Zeitabständen, in kurzen Zeitabständen, in mittellangen Zeitabständen, in langen Zeitabständen, zu festen Zeitpunkten und/oder ereignisabhängig gesammelt werden.

5. Computergestütztes Verfahren nach einem der vorhergehenden Ansprüche, wobei es sich bei dem Modell um ein Systemmodell handelt.

6. Computergestütztes Verfahren nach Anspruch 5, wobei es sich bei dem Systemmodell um ein Versagensmodell von einem System handelt, wobei das Versagensmodell ein Fehlerbaum (FT) oder ein Komponentenfehlerbaum (CFT) ist.

7. Computergestütztes Verfahren nach Anspruch 5 oder 6, wobei es sich bei dem Modellparameter um ein Versagen, eine Versagenshäufigkeit, ein Komponentenversagen, eine Komponentenversagenshäufigkeit oder einen Versagensmodus handelt.

8. Computergestütztes Verfahren nach einem der vorhergehenden Ansprüche, wobei es sich bei dem Schätzungsansatz um einen statistisches Schätzungsverfahren handelt.

9. Recheneinheit zum Ausführen der Verfahrensschritte nach einem der vorhergehenden Ansprüche.

10. Computerprogrammprodukt, das sich direkt in einen internen Speicher eines Computers laden lässt und Softwarecodeteile umfasst, die die Schritte nach einem der Ansprüche 1 bis 8 durchführen, wenn das Computerprogrammprodukt auf einem Computer ausgeführt wird.

**Revendications**

1. Procédé mis en œuvre par ordinateur pour la mise à jour d'un paramètre de modèle pour un modèle, dans lequel le paramètre de modèle devant être mis à jour comprend une valeur de paramètre de modèle et un score de confiance ;
comprenant les étapes :
**caractérisé en ce que**

   a. la fourniture du paramètre de modèle devant être mis à jour, d'un premier ensemble de données d'entrée avec des données accumulées depuis une première ou une précédente mise à jour, d'un second ensemble de données d'entrée avec des données accumulées et utilisées pour la première ou la précédente mise à jour (S1) ;
   b. la détermination d'une signification statistique du premier ensemble de données d'entrée et/ou du second ensemble de données d'entrée en ce qui concerne au moins une condition pour réaliser la mise à jour (S2) ;
   c. la détermination d'un paramètre de modèle mis à jour à l'aide d'une approche d'estimation basée sur le paramètre de modèle devant être mis à jour et le premier ensemble de données d'entrée, si le premier ensemble de données d'entrée est statistiquement significatif (S3) ; dans lequel

   le paramètre de modèle mis à jour comprend une valeur de paramètre de modèle mise à jour et un score de confiance mis à jour ;
   si le premier ensemble de données d'entrée ne satisfait pas l'au moins une condition, la mise à jour est empêchée ; ou le premier ensemble de données d'entrée est complété par le second ensemble de données d'entrée et la mise à jour est réalisée sur les données complétées ;

   d. la détermination d'un paramètre de modèle mis à jour à l'aide d'une approche d'estimation basée sur le paramètre de modèle devant être mis à jour, le premier ensemble de données d'entrée et le second ensemble de données d'entrée ou la conservation du paramètre de modèle devant être mis à jour comme étant le paramètre de modèle mis à jour, si le premier ensemble de données d'entrée et le second ensemble de données d'entrée ne sont pas statistiquement significatifs (S4) ; et
   e. la fourniture du paramètre de modèle mis à jour déterminé en tant que sortie (S5).

2. Procédé mis en oeuvre par ordinateur selon la revendication 1, dans lequel les données accumulées comprennent une pluralité d'éléments de données.

3. Procédé mis en oeuvre par ordinateur selon la revendication 1 ou la revendication 2, dans lequel les données sont générées par un composant de génération de données et/ou collectées par une boucle de retour de développement et d'opération, DevOps Feedback.

4. Procédé mis en oeuvre par ordinateur selon l'une quelconque des revendications précédentes, dans lequel les données sont collectées périodiquement, à intervalles réguliers, selon des intervalles courts, selon des intervalles moyens, selon des intervalles longs, à des instants fixes et/ou en étant commandées par des événements.

**5.** Procédé mis en oeuvre par ordinateur selon l'une quelconque des revendications précédentes, dans lequel le modèle est un modèle de système.

**6.** Procédé mis en œuvre par ordinateur selon la revendication 5, dans lequel le modèle de système est un modèle de défaillance d'un système, dans lequel le modèle de défaillance est un arbre des défaillances (FT) ou un arbre des défaillances de composant (CFT).

**7.** Procédé mis en œuvre par ordinateur selon la revendication 5 ou la revendication 6, dans lequel le paramètre de modèle est une défaillance, un taux de défaillance, une défaillance de composant, un taux de défaillance de composant ou un mode de défaillance.

**8.** Procédé mis en œuvre par ordinateur selon l'une quelconque des revendications précédentes, dans lequel l'approche d'estimation est un procédé d'estimation statistique.

**9.** Unité informatique pour la réalisation des étapes de procédé selon l'une quelconque des revendications précédentes.

**10.** Produit programme d'ordinateur apte à être directement chargé dans une mémoire interne d'un ordinateur, comprenant des parties de code logiciel pour la réalisation les étapes selon l'une quelconque des revendications 1 à 8 lorsque ledit produit programme d'ordinateur est en cours d'exécution sur un ordinateur.

FIG 1

FIG 2

based on 5 failures, LR=0.1 Macro update frquency, 10

# FIG 3

## Update of Failure rate

based on 5 failures, LR=0.1

## Update of Failure rate

based on 5 failures, LR=0.1

**EP 4 315 074 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180267864 A1